# EUROPEAN PATENT APPLICATION

(11) **EP 3 147 816 A2**
(43) Date of publication of application: **29.03.2017**
(21) Application number: 16000182.2
(22) Date of filing: 26.01.2016
(51) Int. Cl.: G06K 9/00, G06K 9/20, G06K 9/22, G06K 9/32, G06K 9/46, G06K 9/68, G06F 3/0484

(54) **MOBILE TERMINAL AND METHOD OF CONTROLLING THE SAME**

(30) Priority: 25.09.2015 KR 20150137030
(71) Applicant: LG Electronics Inc., Seoul 07336 (KR)
(72) Inventor: KU, Hyerim, 06772 Seoul (KR); Song, Yoomee, 06772 Seoul (KR); Kwon, Arim, 06772 Seoul (KR); Jang, Hyungtae, 06772 Seoul (KR); Park, Jungmin, 06772 Seoul (KR); KIM, Hyungsun, 06772 Seoul (KR); KIM, Kyuhee, 06772 Seoul (KR)
(74) Representative: Beyer, Andreas

(57) **Abstract**

A mobile terminal including a camera; a touch screen configured to output a picture received through the camera, said picture having at least a first image text portion having a first attribute and a second image text portion having a second attribute different than the first attribute; and a controller configured to display first and second graphic objects indicating the first and second image text portions are selectable, perform a first predetermined function corresponding to the first attribute of the first image text portion in response to the first graphic object or the first image text portion being selected, and perform a second predetermined function corresponding to the second attribute of the second image text portion in response to the second graphic object or the second image text portion being selected.

## Description

### BACKGROUND OF THE DISCLOSURE

### 1. Field of the Disclosure

The present disclosure relates to a mobile terminal having a picture capture function and a method of controlling the mobile terminal.

### 2. Background of the Disclosure

In recent years an optical character reader or recognition (OCR) function has been applied to a mobile terminal equipped with a camera. In more detail, the OCR function reads characters (text) using light. In the mobile terminal, the OCR function converts light reflected from letters, symbols, and numbers printed or handwritten on paper into electrical signals.

Further, the OCR function corresponds to an image-to-text conversion function. That is, the OCR function converts an image text portion included in the image received through the camera into text. However, the OCR function in the mobile terminal is limited in nature and often inconvenient for the user to use.

### SUMMARY OF THE DISCLOSURE

Therefore, one aspect of the detailed description is to provide a mobile terminal providing an optimized user interface using a picture received through a camera, and a method of controlling the mobile terminal.

Another aspect of the detailed description is to provide a mobile terminal for performing an optimized function using screen information included in a picture received through a camera, and a method of controlling the mobile terminal.

To achieve these and other advantages and in accordance with the purpose of this specification, as embodied and broadly described herein, the present invention provides a mobile terminal including a camera; a touch screen configured to output a picture received through the camera, the picture having at least a first image text portion having a first attribute and a second image text portion having a second attribute different than the first attribute; and a controller configured to display first and second graphic objects indicating the first and second image text portions are selectable, perform a first predetermined function corresponding to the first attribute of the first image text portion in response to the first graphic object or the first image text portion being selected, and perform a second predetermined function corresponding to the second attribute of the second image text portion in response to the second graphic object or the second image text portion being selected. The present invention also provides a corresponding method of controlling the mobile terminal.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1A is a diagram illustrating a mobile terminal according to an embodiment of the present invention;
FIGS. 1B and 1C are conceptual diagrams illustrating the mobile terminal according to an embodiment of the present invention when viewed from different directions;
FIG. 2 is a flowchart illustrating a control method according to an embodiment of the present invention;
FIGS. 3A to 3C are diagrams illustrating the control method in FIG. 2;
FIGS. 4A to 4C are conceptual diagrams illustrating a control method according to one embodiment of the present invention; and
FIGS. 5A to 7B and FIG. 8 are conceptual diagrams illustrating a control method according to another embodiment of the present invention.

### DETAILED DESCRIPTION OF THE DISCLOSURE

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

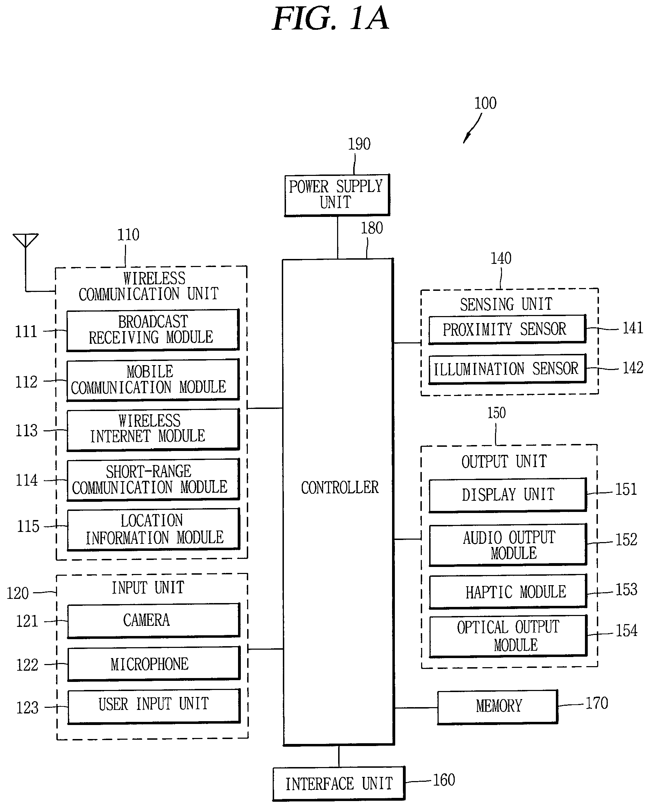

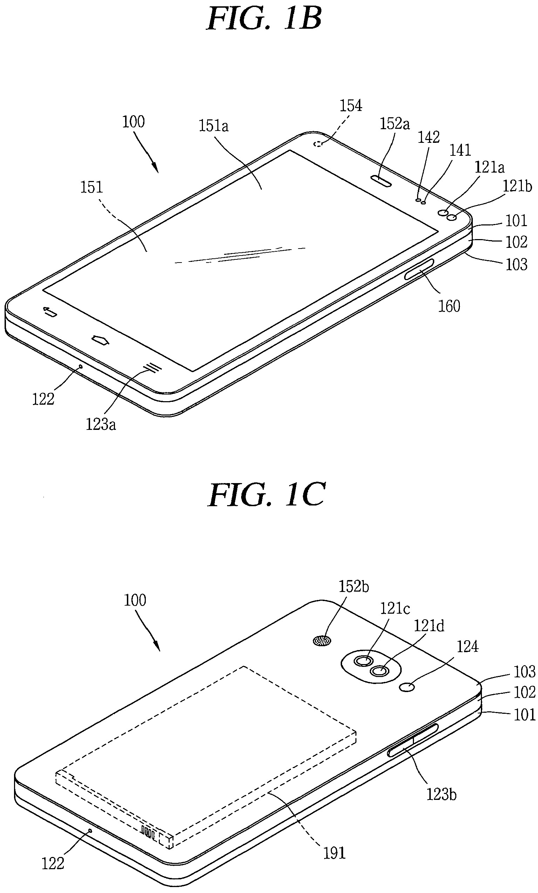

Reference is now made to FIGS. 1A to 1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 121, which is one type of audio input device for inputting an audio signal, and a user input unit 122 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 121, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 122 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in FIG. 1, or activating application programs stored in the memory 170. As one example, the controller 180 controls some or all of the components illustrated in FIG. 1 according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method for a glass type terminal according to various embodiments to be explained later. The operation or the control method for the glass type terminal may be implemented on the glass type terminal by driving at least one application program stored in the memory 170.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114.

Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information. In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition. The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging. The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method based on magnetic induction or a magnetic resonance coupling method based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101. In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170. The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen. As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123. The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

A mobile terminal 100 according to one embodiment of the present embodiment can store a picture received through the camera 121 in the memory 170. In addition, the storing of the picture in the memory 170 is expressed as "imaging a photographic subject," "capturing a picture," "acquiring a picture," "performing a picture capture operation," and so forth. However, no limitation to these expressions is imposed, and any expression can be used indicating the picture being received through the camera 121 is stored in the memory 170.

Further, performing the picture capture function corresponds to executing a picture capture application, and when the picture capture function is performed, the controller 180 activates the camera 121, and controls the camera 122 to capture pictures. In addition, in one example, the picture capture function is performed based on the selection (or the touching) of an icon associated with the picture capture function. When the picture capture function is performed based on the selection of the icon, the display unit 151 is turned on. Further, in addition to the method of selecting the icon associated with the picture capture function, when at least one key (for example, at least one of a hardware key and a software key) is selected from among keys that are provided to the mobile terminal, the picture capture function is performed. In this instance, although the display unit 151 is turned off, the controller 180 can perform the picture capture function in response to the selection of the key provided to the mobile terminal.

In addition, the mobile terminal according to an embodiment of the present invention performs the picture capture operation based on user selection, and the user selection is expressed as a "user control command" or a "control command." Further, the user selection is made in various ways. For example, a user performs the picture capture operation by applying a touch or pressure to the hardware key provided to the mobile, or by touching on the software key or visual key output to the display unit 151. That is, when the touch or the pressure is applied to the hardware key associated with the picture capture function or the touch is applied to the software key or the visual key output to the display unit 151, the controller 180 of the mobile terminal 100 determines that a user control command for performing the picture capture operation is received.

In addition, without a limitation to this, the mobile terminal 100 according to an embodiment of the present invention captures a picture in various ways based on the reception of the user control command. For example, when the picture received (input) through the camera 121 is output to the display unit 151, the controller 180 captures the picture based on the application of a predetermined-type touch on the picture or the display unit 151.

The predetermined-type touch is a touch associated with the picture capture operation and includes various types of touches. For example, the predetermined-type touches include various types of touches such as a short (tap) touch, successive touches that are at least two or more short touches applied within a reference period of time, a long touch, a multi-touch, a drag touch, a flick touch, a pinch-in touch, a pinch-out touch, a swipe touch, and a hovering touch.

In addition, the picture received through the camera 121 is referred to as a preview picture, and is a picture received in real time through the camera 121. That is, the picture (or screen information included in the picture) received through the camera 121is changed based on a movement of the mobile terminal 100, movement of an object (or photographic subject) present within an angle of view of the camera 121, or the like.

The picture (or the preview picture) can be stored as a static picture or a moving picture in the memory unit 170. The "pictures received through the camera 121," which will be described below, include a preview picture, a captured picture, a static picture that is a picture made, by a control command, to be in a temporarily stationary state, and the like.

Further, the mobile terminal performs an OCR function using the picture received through the camera 121. That is, the OCR function converts the screen information (an image) corresponding to a text portion included in the picture into text. Various functions realized using the picture capture function and the OCR function according to an embodiment of the present invention will be described in detail below referring to the accompanying drawings.

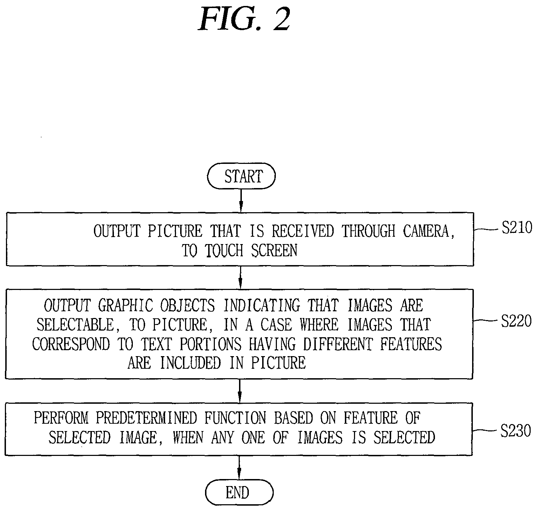

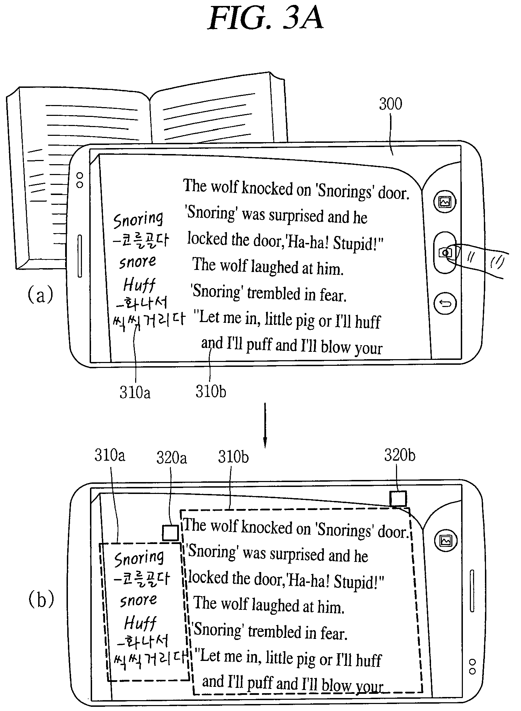

In particular, FIG. 2 is a flowchart illustrating a control method according to an embodiment of the present invention, and FIGS. 3A to 3C are conceptual diagrams illustrating the control method in FIG. 2. As shown in FIG. 2, the controller 180 outputs the picture received through the camera 121 on the display unit 151 (S210). For example, the controller 180 activates the camera 121 based on the selection (the touching) of an icon of an application relating to the camera 121 or of an icon of an application described in the present specification, and outputs the picture received through the activated camera 121 on the display unit 151. In addition, as discussed above, the picture is a preview picture.

Further, when images corresponding to text portions having different features are included in the picture, the controller 180 outputs graphic objects on the picture indicating the images are selectable (S220). Specifically, when the controller 180 determines the images corresponding to the text portions having different features are present in the picture received through the camera 121, the controller 180 outputs the graphic objects indicating that the images are selectable to the vicinity of the images (or so the graphic objects are superimposed onto the images).

When the user focuses the camera 121 on an object (a photographic subject) on which the text portions are printed (or handwritten), the images corresponding to the text portions are included in the picture received through the camera 121. Further, the image corresponding to the text portion has various features (or attributes or characteristics). In particular, the features that are described in the present specification mean references by which the image corresponding to the text portion is categorized.

For example, the features are categorized or defined depending on whether the text portion is written in cursive script or whether the text portion is printed by a printing device (for example, a printer) or is handwritten, or by at least one among a color of the text portion, a color superimposed onto the text portion, a color in the vicinity of the text portion, shading of the text portion, a thickness of the text portion, underlining of the text portion, an inclination of the text portion, a type of language, and the like. In addition, the text portions (or the images corresponding to the text portions) include a letter, an emoticon, a figure, a symbol, and the like.

Further, the controller 180 determines whether or not the image corresponding to the text portion is present in the picture received through the camera 121 or the features of the image corresponding to the text portion using the OCR function or a picture analysis algorithm (a specific algorithm that determines whether or not the image which corresponds to the text portion is present).

When the images corresponding to the text portions having different features are included in the picture, the controller 180 outputs the graphic objects on the picture indicating that the images are selectable. Further, the controller 180 can output the graphic objects when the picture received through the camera 121 is a preview picture, and when a request for capturing the picture is made. For example, when the image received as the preview picture in real time through the camera 121, and when images corresponding to the text portions having different features are present in the preview picture, the controller 180 outputs the graphic objects to the preview picture.

As another example, when the request for capturing the picture (the preview picture) is made (for example, a picture capture button is touched), the controller 180 captures the picture, and outputs the captured picture with the graphic objects indicating the images corresponding to the text portions having different features are included in the captured picture. In addition, the captured picture can be a picture stored in the memory 170 or be a temporary static picture temporarily stored.

Next, an example will be described below in which the graphic objects are output when the request for capturing the picture is made. However, the below description can apply to the preview picture (a preview state) as well in the same/similar manner. In more detail, as illustrated in FIG. 3A(a), when the camera 121 is focused on a photographic subject in which text items are present, images 310a and 310b corresponding to the text portions are included a picture 300 received through the camera 121.

In addition, the images 310a and 310b have different features. In particular, the image 310a corresponds to a text portion having a first feature or attribute and the image 310b corresponds to a text portion having a second feature or attribute different from the first feature. For example, the image 310a corresponds to a text portion handwritten by the user, and the image 310b corresponds to a text portion printed by the printing device (for example, the printer).

In the present specification, for convenience, an example is described in which images corresponding to text portions having two different features are included in the picture. However, without a limitation to this, the present specification also applies to images corresponding to text portions having three or more different features. Further, when the images 310a and 310b corresponding to the text portions having different features or attributes are included in the picture 300, the controller 180 outputs graphic objects 320a and 320b (for example, check boxes) indicating that the images 310a and 310b are selectable on the picture 300, as illustrated in FIG. 3A(b).

As one example, the graphic objects 320a and 320b are displayed in the preview state when the controller 180 recognizes images corresponding to text portions having different features are included in the picture received through the camera 121. As another example, the graphic objects 320a and 320b are output based on the touching of the picture capture button (or the reception of a picture capture request) as illustrated in FIG. 3A(a). In this instance, a picture (that is, a static picture) resulting from capturing the picture (the preview picture) received through the camera 121 is output on the display unit 151, and the graphic objects 320a and 320b are output on the captured picture.

Referring again to FIG. 2, when one image is selected from among the images corresponding to the text portions having different features, the controller 180 performs a predetermined function based on the feature or attribute of the selected image (S230). In more detail, the predetermined functions include various types of functions of using an image corresponding to a text portion. For example, the predetermined functions include limiting outputting of an image corresponding to a text portion, an OCR function of converting the image text portion into text, translating a post-conversion text portion resulting from the conversion, conducting a search using the post-conversion text portion, providing additional information relating to the post-conversion text portion, inputting the post-conversion text portion into a specific application (for example, a memo-related application, a calendar-related application, or a schedule-related application), and the like.

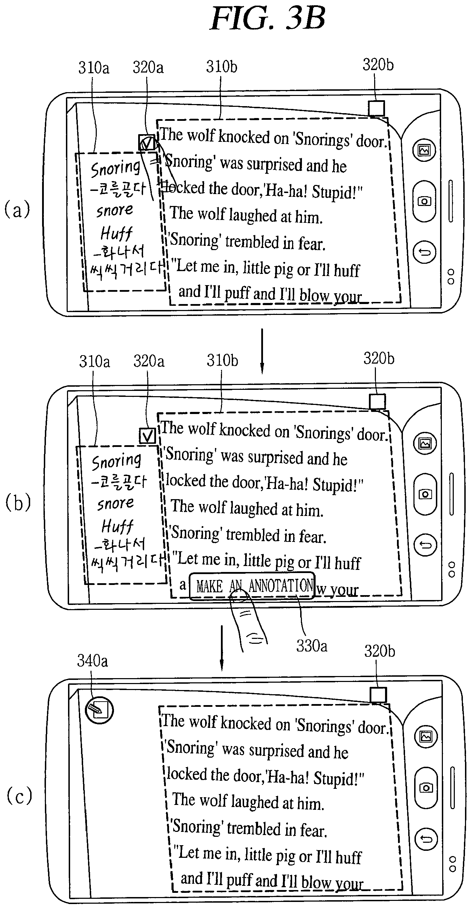

Specifically, when the image (or the graphic object 320a output on the image 310a) is selected (touched), the controller 180 outputs a graphic object associated with a first function on the picture. In addition, when the image (or the graphic object 320b) is selected (touched), the controller 180 outputs a graphic object associated with a second function different from the first function on the picture. For example, as illustrated in FIG. 3B(a), when the image 310a (or the graphic objet 320a) is selected, the controller 180 outputs a graphic object 330a associated with the first function on the picture, as illustrated in FIG. 3B(b). As one example, the first function limits outputting of the image 310a corresponding to the text portion having the first feature, such as reducing the amount of information displayed in the image 310a.

As illustrated in FIG. 3B(b), when a touch is applied to a graphic object 330a associated with the first function, the outputting of the image 310a is limited in the display unit 151. For example, the image 310a is no longer displayed on the display unit 141as illustrated in FIG. 3B(c). In addition, based on the application of the touch, the controller 180 outputs a graphic object 340a on the picture with which a function of re-displaying the outputting-limited image corresponding to the text portion is associated.

In more detail, when the graphic object 340a is touched, the controller 180 outputs the image 310a corresponding to the outputting-limited text portion on the picture. In addition, when the outputting of the image 310a is limited, the controller 180 outputs a storage icon on the display unit 151 with which a storage function is associated. When the storage icon is selected, the controller 180 stores the picture in the memory 170 in which the image corresponding to the text portion having the first feature is included.

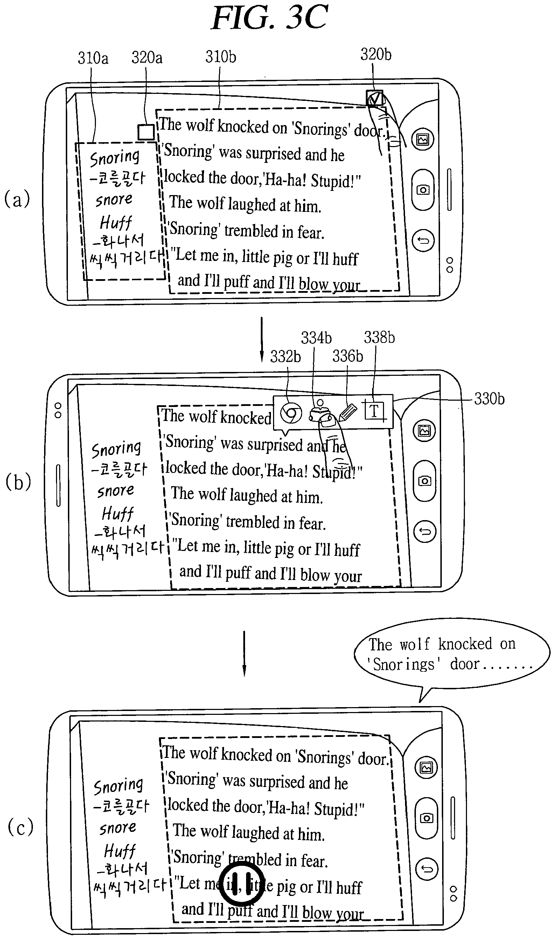

As another example, as illustrated in FIG. 3C(a), when the image 310b (or the graphic object 320b) is selected, the controller 180 outputs graphic objects 332b, 334b, 336b, and 338b on the picture with which the second function is associated as illustrated in FIG. 3C(b). As one example, the second functions include various functions that can be performed by converting the image text portion into text and then using a post-conversion text portion. For example, the second functions include at least one among an Internet search function, a sound output function, a translation function, and a memo function.

As illustrated in FIG. 3C(b), the graphic objects with which the second function is associated, that is, a graphic object 332b with which the Internet search function is associated, a graphic object 334b with which the sound or audio output function is associated, a graphic object 336b with which a memo function is associated, and a graphic object 338b with which the translation function is associated, are displayed on the picture.

Further, when a touch is applied to the graphic object (for example, the graphic object 334b with which the sound output function is associated) with which the second function is associated, the controller 180 converts the image 310b corresponding to the text portion having the second feature into text using the OCR function. In addition, the controller 180 performs the second function (for example, the sound output function) associated with the graphic object 334b touched using the post-conversion text portion, as illustrated in FIG. 3C(c).

Thus, a new user interface is provided capable of performing a function that varies from one feature to another, when the images corresponding to the text portions having different features are included in the picture. In addition, the method is described above in which the function that varies depending on whether the first and second features are the text portion handwritten by the user or the text portion printed by the printing device is performed. Next, embodiments are described when the first and second features are categorized by color referring to the accompanying drawing.

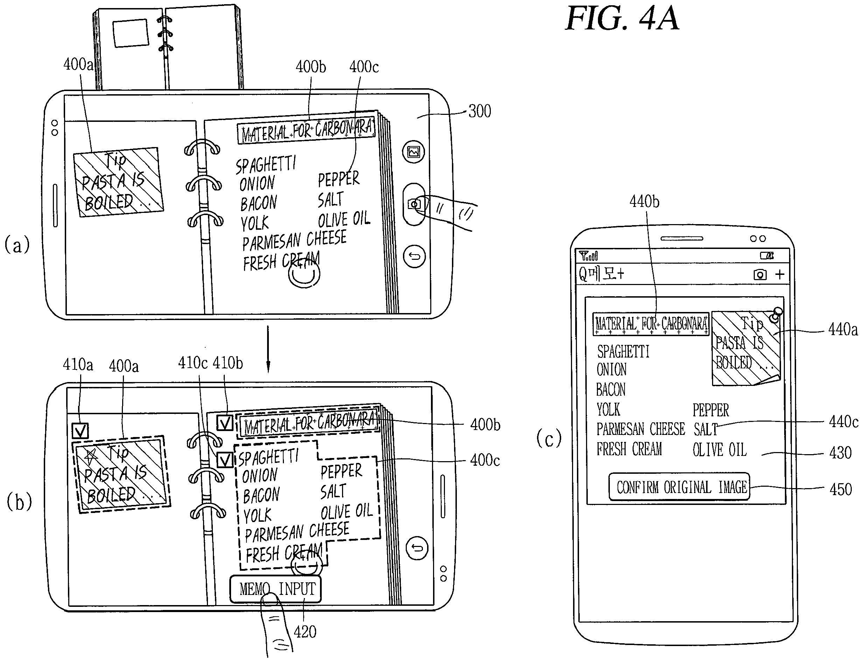

In particular, FIGS. 4A to 4C are diagrams illustrating a control method according to another embodiment of the present invention. In this embodiment, the features of the image corresponding to the text portion are categorized based on a color of the image corresponding to the text portion included in the picture or on a color (a color superimposed onto the image which corresponds to the text portion) of the vicinity of the image corresponding to the text portion.

For example, as illustrated in FIG. 4A(a), an image 400a corresponding to a text portion onto which a first color is superimposed, an image 400b corresponding to a text portion onto which a second color different from the first color is superimposed, and an image 400c corresponding to a text portion onto which any color is superimposed (or onto which a third color is superimposed) are included in the picture 300 received through the camera 121.

As illustrated in FIG. 4A(b), the controller 180 selects an image corresponding to a text portion distinguished based on a color. For example, the selection, as illustrated in FIGS. 2 to 3C(c), can be made based on the touching of graphic objects (check boxes) 410a, 410b, and 410c output based on the recognition of images corresponding to the text portions which are distinguished based on the colors. As another example, the selection can be made based on the outputting of the graphic objects (the check boxes) 410a, 410b, and 410c when the request for capturing the picture is received and based on the application of the touch to the graphic objects (or the images corresponding to the text portions).

As illustrated in FIG. 4A(b), when at least two of the images 400a, 400b, and 400c are selected, the controller 180 outputs the graphic object 420 associated with the memo function on the picture. As illustrated in FIG. 4A(b), when the graphic object 420 is touched, the controller 180 converts the selected images 400a, 400b, and 400c into text using the OCR function. Further, as illustrated in FIG. 4A(c), the controller 180 executes the memo application, and displays post-conversion text portions 440a, 440b, and 440c resulting from the conversion on an execution screen 430 of the memo application.

Further, as illustrated in FIG. 4A(c), the post-conversion text portions 440a, 440b, and 440c are displayed on the execution screen 430 of the memo application and are distinguished from each other by their respective colors. For example, referring to FIGS. 4A(a) to 4A(c), the post-conversion text portion 440a is displayed on the execution screen 430 so the first color is superimposed. Likewise, the post-conversion text portion 440b is displayed on the execution screen 430 so the second color is superimposed, and the post-conversion text portion 440c is displayed on the execution screen 430 so no color is superimposed.

Further, the controller 180 displays a graphic object 450 in the execution screen 430 for outputting a picture included the image corresponding to the text portion. When the graphic object 450 is selected, the controller 180 outputs a picture illustrated in FIG. 4A(b) on the display unit 151. Thus, when an image corresponding to a text portion onto which a predetermined color is superimposed is included in a picture, the controller 180 extracts the image corresponding to the text portion onto which the color is superimposed, and performs at least one of text conversion and translation using the extracted image. Further, the results (a post-conversion text portion and a post-translation text portion resulting from the translation) of performing the text conversion and the text translation are displayed on the execution screen of the memo application.

In addition, the predetermined color means a color other than colors that fall within a specific color range (for example, a white color range or a no-color range). That is, the controller 180 determines a color other than a specific color (a color in the white color range) as a predetermined color. Also, the predetermined colors include all colors in a color range.

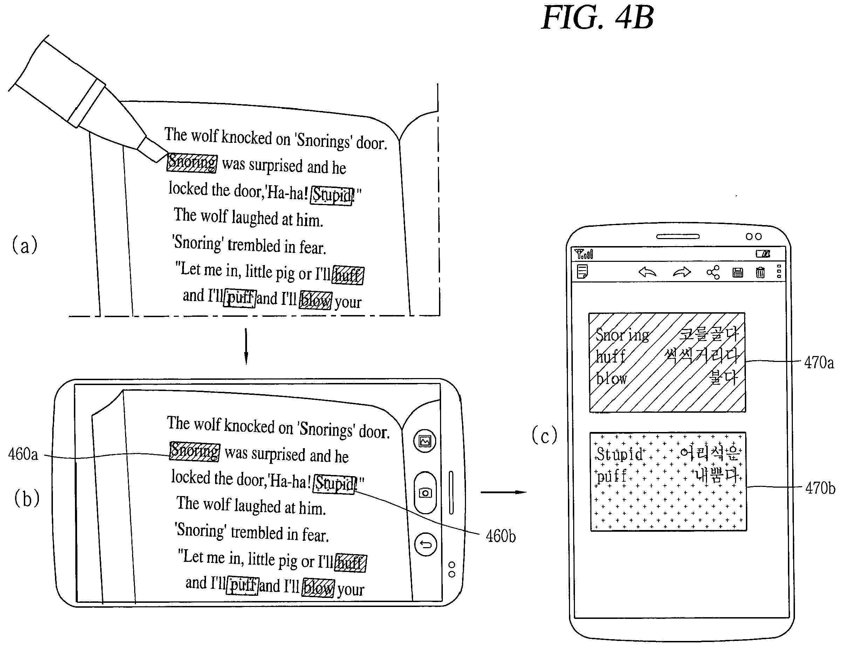

As one example, as illustrated in FIG. 4B(a), a color chosen by the user is superimposed onto a photographic subject of which a text portion is present. When the text portion in the photographic subject is highlighted with a highlighter pen, the text portion highlighted with the highlighter is regarded as a text portion onto which a predetermined color is superimposed.

As illustrated in FIG. 4B(a), when at least two or more colors are superimposed onto a text portion in the photographic subject, images 460a and 460b corresponding to text portions onto which at least two or more predetermined colors are superimposed are included in the picture received through the camera 121 as illustrated in FIG. 4B(b).

In this instance, based on a user request (for example, when a touch is applied on the picture capture button or when a touch is applied to the graphic object associated with the memo function), the controller 180 extracts an image corresponding to a text portion onto which the at least two predetermined colors are superimposed, and performs at least one of the text conversion and the text translation using the extracted image.

Further, as illustrated in FIG. 4B(c), the controller 180 displays the results (the post-conversion text portion and the post-translation text portion resulting from the translation) of performing the text conversion and the text translation, on the execution screen of the memo application, so the results are distinguished by the at least two colors 470a and 470b. That is, when at least two colors are superimposed onto an image corresponding to a text portion included in the picture, the controller 180 displays (inputs) the post-conversion text portion and the post-translation text portion resulting from the translation) on the execution screen of the memo application so the two post-conversion text portions are distinguished by the at least two colors.

For example, the post-conversion text portions resulting from converting and translating the image corresponding to the text portion onto which the first color is superimposed are displayed on the execution screen of the memo application so the first color is superimposed onto the post-conversion text portions, and the post-conversion text portions resulting from converting and translating the image corresponding to the text portion onto which the second color is superimposed are displayed on the execution screen of the memo application so the second color is superimposed onto the post-conversion text portions. Thus, with this configuration, an application (or a user interface) for optimally generating a vocabulary list is provided.

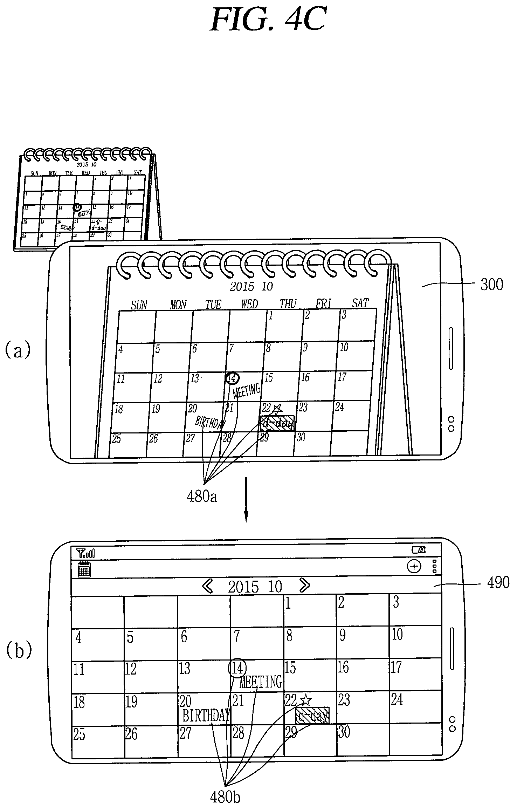

Further, as illustrated in FIG. 4C(a), when the user focuses the camera 121 on a calendar (a photographic subject), a graphic image corresponding to the calendar is included in a picture received through the camera 121. When the graphic image corresponding to the calendar is included in the picture, the controller 180 extracts an image 480a corresponding to a text portion included in the graphic image. When the picture capture request is received, or the image corresponding to the text portion is recognized by the controller 180, the extraction is performed.

Further, the controller 180 converts the extracted image into text, and as illustrated in FIG. 4C(b), displays (inputs) a post-conversion text portion 480b resulting from the conversion on (into) an execution screen 490 of a calendar application. Further, the post-conversion text portion 480b resulting from the conversion, as illustrated in FIG. 4C(b), is displayed on the execution screen 490 of the calendar application so the post-conversion text portion 480b corresponds to a color in which the image 480 is displayed, and so the post-conversion text portion 480b corresponds to a position (a date) on which the image 300 is displayed.

For example, the controller 180 displays or inputs a circular mark and a post-conversion text portion (meeting) on the "14th" on the execution screen of the calendar application, using a graphic image corresponding to the calendar included in the picture received through the camera 121, so the circular mark and the post-conversion text portion correspond to a circular mark hand-drawn on the 14th on the calendar (the photographic subject) and "meeting" handwritten on "14th" on the calendar, respectively.

As another example, the controller 180 displays or inputs a post-conversion text portion d-day resulting from converting "d-day" handwritten on the "22nd" on the calendar (the photographic subject) and onto which a specific color is superimposed, on the "22nd" on the execution screen of the calendar application, so the specific color is superimposed onto the "22nd" of the execution screen of the calendar application. Thus, with this configuration, a user interface is provided through which it is possible to optimally input a text portion handwritten on the calendar.

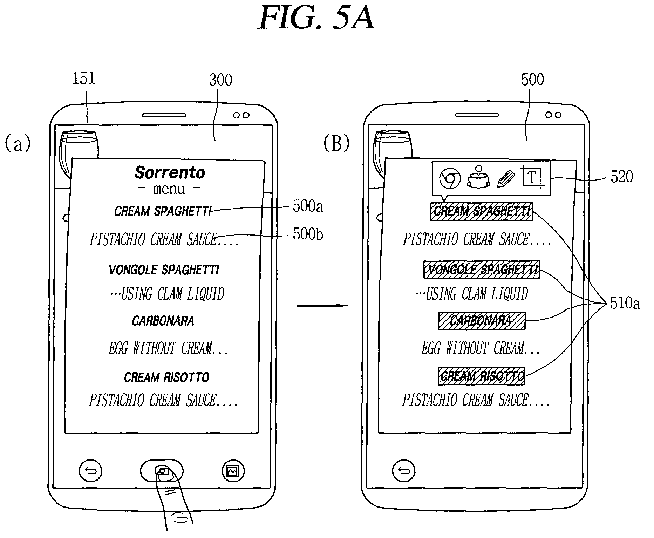

The method is described above in which various functions are performed using the features distinguished based on colors. Next, an embodiment is described when a feature corresponding to a thickness of a character is used referring to the accompanying drawings. In particular, FIGS. 5A to 8 are conceptual diagrams illustrating a control method according to another embodiment.

Referring to FIG. 5A to 5F, a menu as a photographic subject will be described as an example. As illustrated in FIG. 5A(a), the picture 300 received through the camera 121 includes an image 500a (for example, an image corresponding to a text portion having a thickness a predetermined value or above, or an image corresponding to boldface) corresponding to a text portion having the first feature, and an image 500b (for example, an image corresponding to a text portion having a thickness below the predetermined value, or an image that does not correspond to the boldface) corresponding to a text portion having the second feature.

FIG. 5A(b) illustrates images 510a highlighted and indicating image portions including text. In addition, the controller 180 can select only an image corresponding to a text portion that has any one feature (for example, the first feature) of the first and second features, from the picture received through the camera 121. The selection is performed based on the reception of the picture capture request or on the recognition of the first and second features.

When the image corresponding to the text portion having any one of the first and second features is selected (or when the image having any one of the first and second features is recognized by the controller 180), the controller 180 outputs graphic objects 520 associated with a predetermined function on the picture. When any one graphic object 520 is selected, the controller 180 converts the selected image into text and performs a function (for example, the Internet search function, the translation function, or the like) associated with the selected graphic object, using the post-conversion text portion.

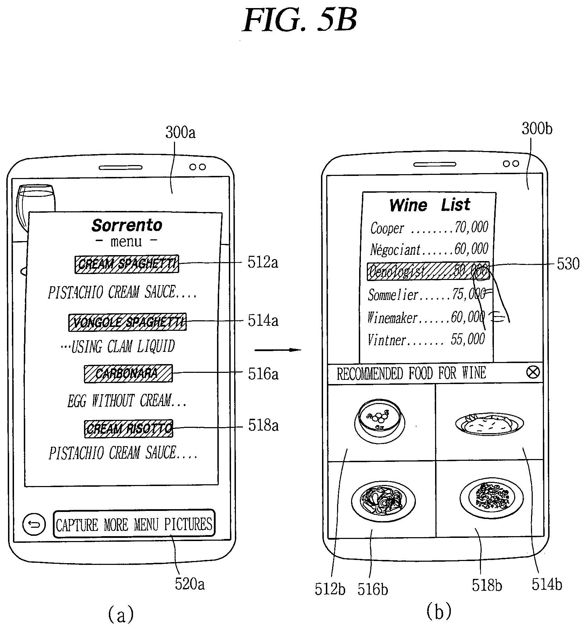

Further, as illustrated in FIGS. 5B(a) and 5B(b), the controller 180 selects only images 512a, 514a, 516a, and 518a corresponding to a text portion that has any one of the first and second features from a first picture 300a received through the camera 121. In addition, based on the user request, that is, when a touch 530 is applied to any one of images corresponding to text portions included in a second picture 300b different from the first picture 300a, the controller 180 outputs images 512b, 514b, 516b, and 518b relating to the selected images on the display unit 151, based on the touched image and the selected images.

For example, when only the images 512a, 514a, 516a, and 518a corresponding to the text portions having any one of the features (for example, the first feature) are selected (or recognized) from the first picture 300a, the controller 180 outputs a graphic object 520a associated with a function of receiving a new second picture 300b, as illustrated in FIG. 5B(a). The user request is the touching of the graphic object 520a. In addition, the controller 180 converts the image corresponding to the text portion having any one of the features included in the first picture 300a into text and stores (temporarily stores) a post-conversion text portion in the memory 170. Further, when the graphic object 520a is touched, the controller 180 receives different pictures (the first picture) multiple times, and selects only an image corresponding to the text portion having any one of the features, which are included in each of the pictures (each of the first pictures). Further, the controller 180 converts the selected image in each of the pictures into text, and stores a post-conversion text portion in the memory 170.

In the example in FIG. 5B, a text portion having any one of the features corresponds to a food menu. Further, based on the selection of the graphic object 520a, the controller 180 outputs the second picture 300b on the display unit 151. As illustrated in FIG. 5B(b), when any one image 530 of the images corresponding to the text portions included in the second picture 300b is touched, the controller 180 converts the touched image into text.

As one example, the touched image is any one of the text portions included in a wine menu. Further, the controller 180 extracts (selects) a recommended meal best described by the touched image (or the post-conversion text portion) from the image corresponding to the text portion having any one of the features included in the previously captured picture. The recommended meal best described by the touched image can be already stored in an external server (which is connected through the Internet) or the memory 170.

Further, as illustrated in FIG. 5B(b), based on the touched image and the image corresponding to the text portion having any one of the features (that is, based on the images that are selected from the first picture), the controller 180 outputs the images (that is, a photograph of the food menu) 512b, 514b, 516b, and 518b that relate to the selected images on the display unit 151.

For example, when meals that are best described by the touched image (a wine menu) are images corresponding to meal 1, meal 2, meal 3, and meal 4, among the images corresponding to the text portions selected from the first picture, the controller 180 receives photographs of foods corresponding to the menu 1, the menu 2, the menu 3, and the menu 4, from the external server, and outputs the received photographs 512b, 514b, 516b, and 518b of foods on the display unit 151. Thus, a user interface is provided through which information on a recommended food is conveniently received using the camera.

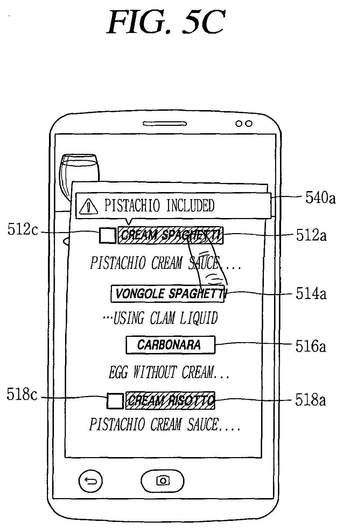

Further, the controller 180 outputs additional information to the display unit 151 (or the picture) using an image corresponding to a text portion. For example, as illustrated in FIG. 5C, the controller 180 selects only the images 512a, 514a, 516a, and 518a corresponding to the text portion having any one feature (for example, the first feature) of the first and second features from the picture 300 received through the camera 121.

Further, the controller 180 outputs specific graphic objects (for example, check boxes) 512c and 518c to the vicinity of the images 512a and 518a to which additional information can be output among the selected images. In addition, the controller 180 converts the selected images into text and receives additional information by conducting an Internet search and so forth using a post-conversion text portion. Further, based on a post-conversion text portion resulting from receiving and converting additional information, the controller 180 outputs a specific graphic object to the vicinity of the image corresponding to the text portion.

Also, when at least one graphic object (for example, the graphic object 512c) of the specific graphic objects is selected, the controller 180 outputs additional information 540a relating to the image 512a corresponding to the selected specific graphic object on the picture. Further, regardless of whether or not the additional information can be output, all the specific graphic objects are displayed on the vicinity of the image corresponding to the text portion having any one of the features, which is included in the picture. The user can also directly touch the image 512a to output the additional information 540a rather than touching the checkbox 512c.

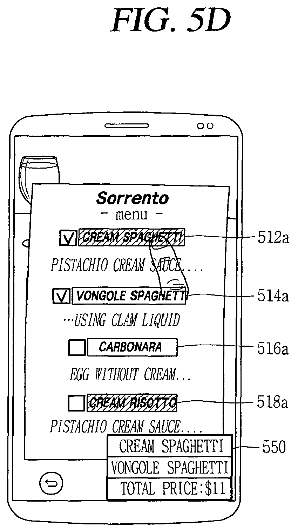

Further, as illustrated in FIG. 5D, when at least one or more specific graphic objects (for example, multiple specific graphic objects) are selected, the controller 180 can output additional information (for example, price information 550) relating to the selected specific graphic objects on the display unit 151.

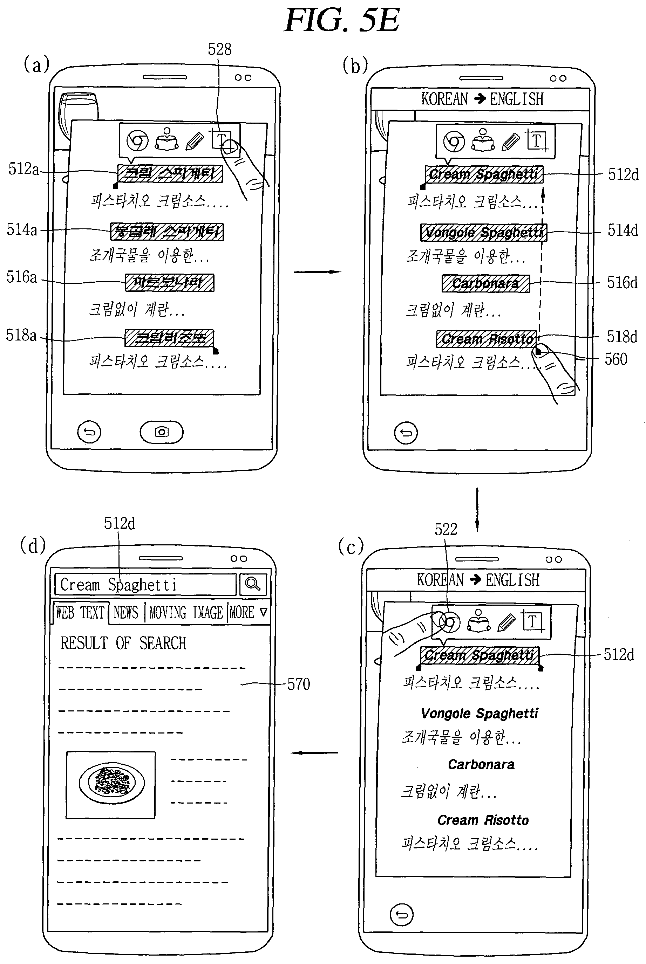

In addition, the mobile terminal according to an embodiment of the present invention can perform various functions. For example, as illustrated in FIG. 5E(a), the controller 180 selects only an image corresponding to a text portion having any one of the first and second features from the picture received through the camera 121. The controller 180 also converts the selected image into text, and displays a post-conversion text portion so the post-conversion text portion is superimposed onto the selected images.

Further, when a graphic object 528 associated with the translation function is touched when the image is selected, the controller 180 converts the selected images into text, translates a post-conversion text portion, and then displays a post-conversion text portion resulting from the translation on the picture, as illustrated in FIG. 5E(b). Also, the post-conversion text portions 512d, 514d, 516d, and 518d resulting from the translation are superimposed onto the images corresponding to the text portions.

Further, a graphic object 560 through which the selected image can be adjusted is displayed on the images corresponding to the text portions having any of the features. As illustrated in FIGS. 5E(a) to 5E(d), the controller 180 changes (adjusts) the selected images based on the drag touch applied to the graphic object 560. That is, this operation adjusts a section set on a block-by-block basis.

In addition, when the image corresponding to the text portion is converted into text or a post-conversion text portion is translated, the graphic object 560 is output on the picture. As illustrated in FIG. 5E(c), when any one (for example, a post-translation text portion 512d resulting from the translation) of the post-translation text portions is selected and then a graphic object 522 associated with the Internet search function is touched, the controller 180 outputs a web page 570 resulting from conducting a search using the one post-translation text portion 512d on the display unit 151, as illustrated in FIG. 5E(d).

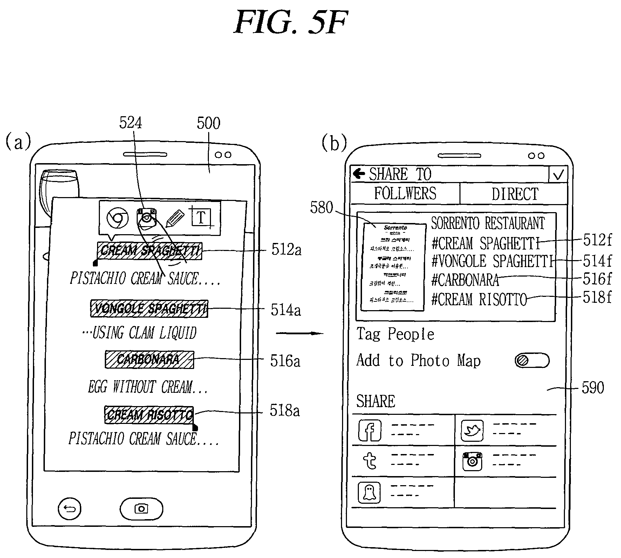

The search function is applied in the same or similar manner, not only to the post-translation text portion, but also to the post-conversion text portion. Further, as illustrated in FIG. 5F(a), when only the images 512a, 514a, 516a, and 518a corresponding to the text portions having any one of the first and second features are selected by the controller 180, and when a graphic object 524 associated with an SNS function is touched, the controller 180 outputs an execution screen 590 of an SNS application on the display unit 151.

Further, as illustrated in FIGS. 5F(a) and (b), the controller 180 registers a picture 500 received through the camera 121 as an SNS attachment file 580. Also, the controller 180 converts the images 512a, 514a, 516a, and 518a corresponding to the text portions, which are selected, and automatically inputs post-conversion text portions 512f, 514f, 516f, and 518f resulting from the conversion, into an input window of the execution screen 590.

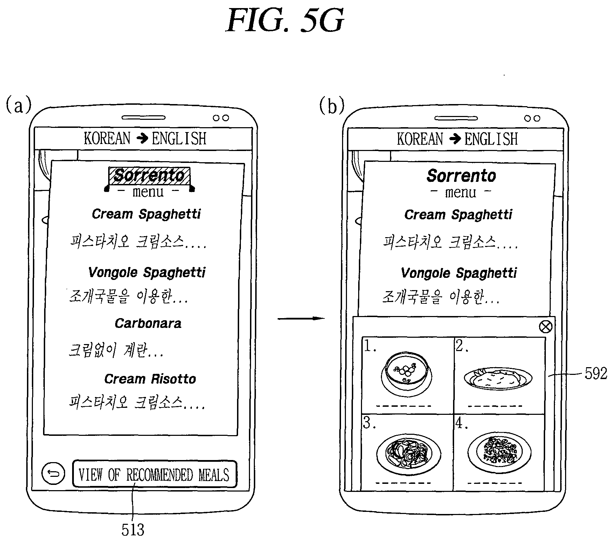

In addition, the post-conversion text portions 512f, 514f, 516f, and 518f resulting from the conversion can be input into the input window without any change, and be input into the input window with a specific symbol added to the post-conversion text portions 512f, 514f, 516f, and 518f. As illustrated in FIG. 5G(a), when an image corresponding to a restaurant is selected among images corresponding to text portions included in the picture received through the camera 121, the controller 180 outputs a graphic object 513 associated with a function of outputting food images provided by the restaurant, on the picture.

Specifically, after the image corresponding to the text portion having any one of the first and second features is selected, and when a specific image is selected based on the user request, the controller 180 converts the specific image into text, and based on a post-conversion text portion resulting from the conversion, determines whether or not the selected specific image is an image corresponding to a name of the restaurant. Further, the controller 180 performs an Internet search using the post-conversion text portion or determines the name of the restaurant based on data stored in the memory 170. In this instance, the controller 180 outputs the graphic object 513 on the picture.

When the graphic object 513 is selected, the controller 180 searches for images of food that can be provided by the restaurant, using the post-conversion text portion, and selects at least some food images 592 resulting from the search. As one example, at least some food images that are output on the picture are a predetermined number of food images selected in the order in which the number of times that the food is recommended decreases or in the order in which the number of times that the food is searched for decreases. With this configuration, a user interface is provided through which additional information is optimally provided using the camera.

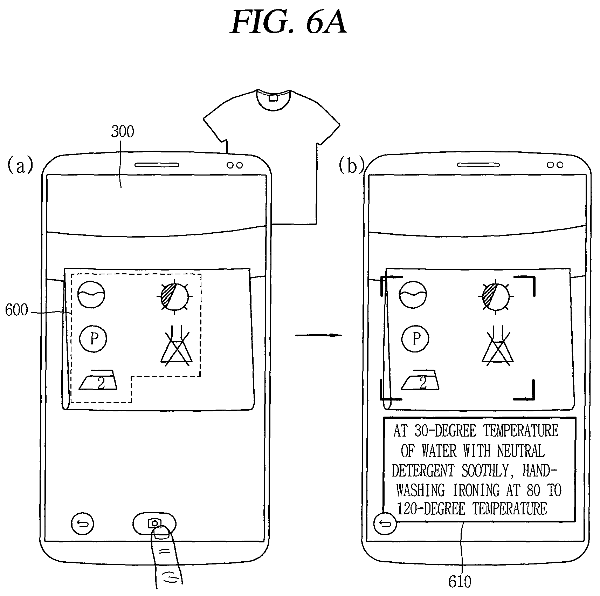

Next, an embodiment of the present invention will be described in more detail below referring to the accompanying drawing. As illustrated in FIG. 6A(a), when the user focuses the camera 121 on a tag attached to clothes or the like, an image 600 corresponding to a symbol drawn on the tag is included in the picture 300 received through the camera 121. In response to the picture capture request, the controller 180 recognizes the image 600 corresponding to the symbol drawn in the tag, and as illustrated in FIG. 6A(b), outputs additional information 610 on the picture. Further, as described above, a specific graphic box (a check box) can be displayed on the vicinity of symbols, and additional information can be provided on the image 600 corresponding to the symbol. Further, when the specific graphic object is selected, the controller 180 outputs only the additional information corresponding to the symbol of the selected specific graphic object on the display unit 151.

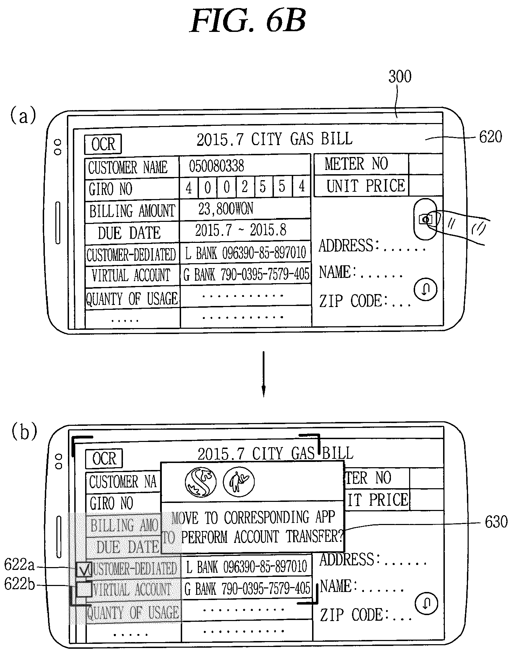

In another example, as illustrated in FIG. 6B(a), a graphic image 620 corresponding to a bill is included in the picture 300 received through the camera 121. When that the controller 180 determines the graphic image 620 is a photographic subject relating to an account transfer, such as the bill, the controller 180 outputs an icon 630 of a banking-related application on the picture, as illustrated in FIG. 6B(b). Further, the icon 630 is output based on the reception of the picture capture request.

In addition, the controller 180 recognizes an image corresponding to a text portion included in the graphic image 620, and outputs specific objects 622a and 622b to the vicinity of the image corresponding to specific information (for example, an account number, or the like) in the recognized image.

When any one (for example, the specific graphic object 622a) of the specific graphic objects 622a and 622b is selected, and when the icon 630 is selected, the controller 180 outputs an execution of the banking-related application corresponding to the selected icon on the display unit 151. Further, the controller 180 converts the image 622a corresponding to the text portion, which is selected, into text.

The controller 180 also automatically inputs the post-conversion text portion (for example, the account number) resulting from the conversion into a specific portion (for example, an account number input box) included in the execution screen of the banking-relating application. Further, the controller 180 recognizes an image corresponding to amount-of-money information, and converts the recognized image into text.

In addition, the controller 180 automatically displays (inputs) a post-conversion text portion (the amount-of-money information) resulting from the conversion into an amount-of-money input box included in the execution screen of the banking-relating application. With this configuration, a user interface is provided through which the account transfer is performed in a more convenient manner.

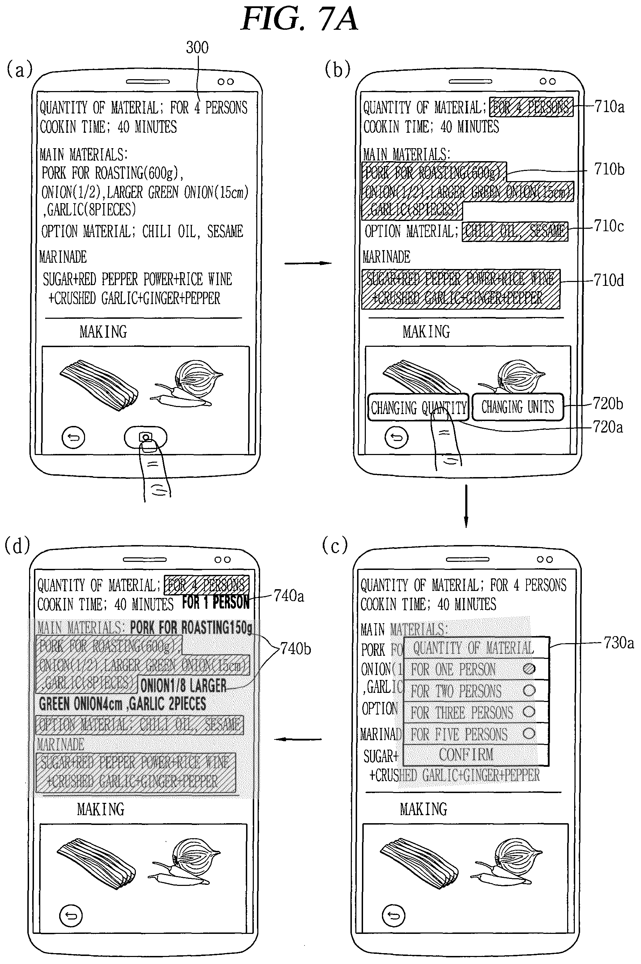

In addition, various pieces of additional information are provided using an image corresponding to a text portion included in a picture received through the camera 121. For example, as illustrated in FIG. 7A(a), an image including a text portion relating to a recipe is in a picture received from the camera 121. In this instance, when the picture capture request is received, the controller 180 recognizes images 710a, 710b, 710c, and 710d corresponding to text portions relating to the recipe included in the picture, and as illustrated in FIG. 7A(b), selects the recognized images.

In addition, when the controller 180 determines the image corresponding to the text portion included in the picture relates to the recipe, the controller 180 displays graphic objects 720a and 720b associated with a predetermined function relating to the recipe, as illustrated in FIG. 7A(b). For example, the predetermined function changes a quantity relating to the recipe or changes units.

As illustrated in FIG. 7A(b), when a graphic object 720a associated with the function of changing the quantity, the controller 180 outputs a popup window (or a selection window) 730a on the display unit 151 through which the quantity is selected, as illustrated in FIG. 7A(c). Further, the quantity (for example, "for 4 persons") corresponding to the image 710a for the text portion included in the picture is excluded from the selection window.

In addition, when a specific quantity is selected, the controller 180 displays pieces of quantity information 740a and 740b resulting from changing quantities of materials based on the selected quantity, on the vicinity of the image 710b corresponding to a text portion relating to a quantity of material included in the picture, as illustrated in FIG. 7A(d).

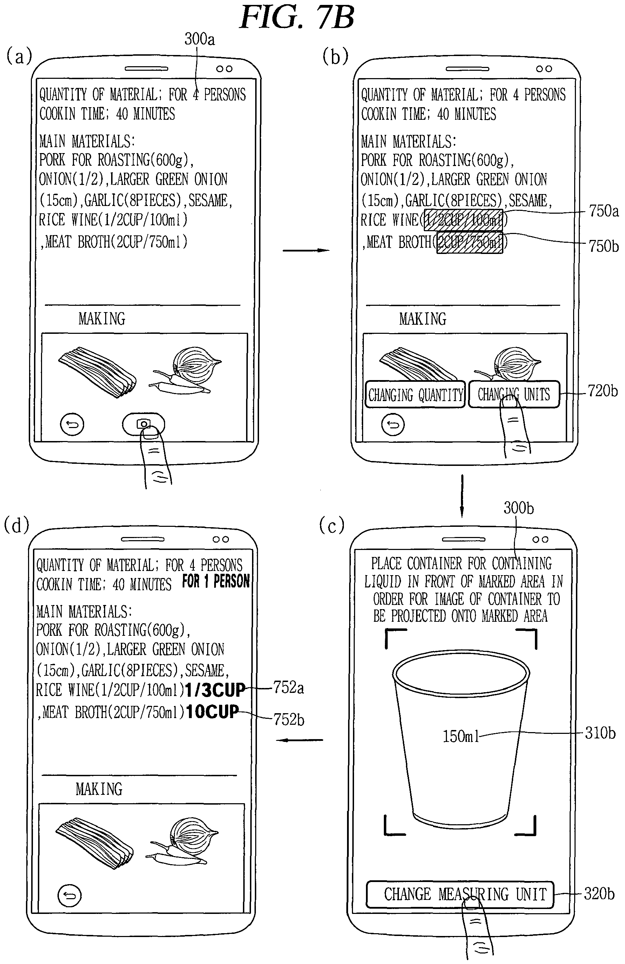

As illustrated in FIG. 7B(b), when a graphic object 720b associated with a function of changing units is selected, the controller 180 outputs a new picture 300b on the display unit 151, as illustrated in FIG. 7B(c). Further, when the user focuses the camera 121 on an object (for example, a cup) for measuring a quantity, an image corresponding to the object is displayed on the new picture 300b.

Also, the controller 180 determines a distance between the main body and the object using multiple cameras 121a and 121b or 121c and 121d as illustrated in FIGS. 1B and 1C, and based on the distance, calculates a volume of the object. Further, the controller 180 displays information 310b corresponding to the calculated volume on the picture. When a button 320b associated with the function of changing units (or measuring units) displayed on the new picture 300b is selected, the controller 180 displays the original picture 300a on the display unit 151, and displays pieces of information 752a and 752b resulting from changing the units (or the measuring units) based on the calculated volume of the object on the vicinity of images 750a and 750b.

That is, the controller 180 changes information relating to a volume included in the picture based on a volume corresponding to an object of which a new picture is captured, and outputs the changed information on the picture. For example, when the quantity of material included in the picture is a half cup having a capacity of 100 ml, the quantity of material corresponds to a quantity of 50 ml. When the calculated volume is 150 ml, the changed information displayed on the vicinity of the image corresponding to the text portion relating to the amount of material is "one third of the cup that has a capacity of 150 ml." With this configuration, a user interface is provided and optimized for a recipe using the camera.

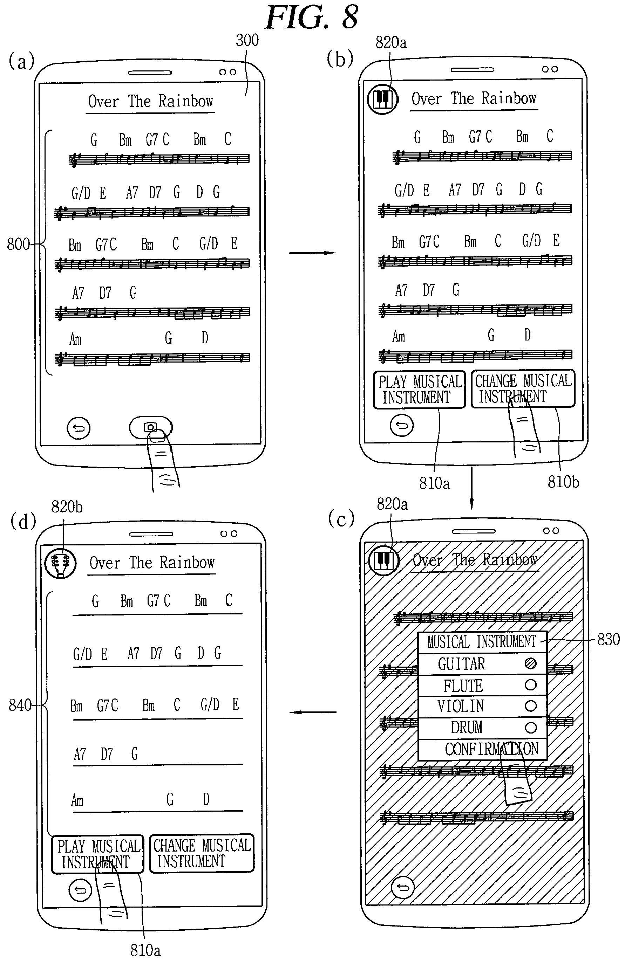

In addition, as illustrated in FIG. 8(a), a graphic image 800 corresponding to sheet music is included in the picture 300 received through the camera 121. In this instance, the controller 180 analyzes the graphic image 800, determines which musical instrument the sheet music corresponds to, and as illustrated in FIG. 8(b), displays a graphic object 820a indicating a corresponding musical instrument on the picture. In addition, the controller 180 outputs graphic objects 810a and 810b associated with a function relating to the sheet music on the picture.

The graphic objects 820a, 810a, and 810b, as illustrated in FIG. 8(a), is output based on the reception of the picture capture request. The functions relating to the sheet music include changing a musical instrument (or a piece of sheet music), playing a musical instrument, or the like. Further, as illustrated in FIG. 8(b), when the graphic object 810b associated with the function of changing the musical instrument is selected, the controller 180 outputs a popup window (or a selection window) 830 through which a different musical instrument to be played is selected on the display unit 151, as illustrated in FIG. 8(c).

When the musical instrument different from the determined musical instrument is selected, as illustrated in FIG. 8(d), the controller 180 changes the graphic image 800 corresponding to the sheet music to an image of sheet music 840 corresponding to the different music instrument. An image 820b indicating the different musical instrument can also be displayed on the piece of sheet music 840.

As illustrated in FIG. 8(d), when the graphic object 810a associated with the function of playing a musical instrument is selected, based on the graphic image 840 (the image of the sheet music) output on the display unit 151, the controller 180 outputs sound resulting from playing the graphic image 840, as sound resulting from playing the musical instrument 820b associated with the graphic image 840. With this configuration, various functions are performed in different fields using a picture received through the camera.

As described above, according to an embodiment of the present invention, various functions can be performed based on features of an image corresponding to a text portion included in a picture. In addition, a novel user interface is provided through which an image corresponding to a text portion included in a picture can be converted into text and thus a post-conversion text portion resulting from the translation can be input into a specific application, reflecting a feature of the image corresponding to the text portion. Further, a user interface is provided through which optimized additional information can be provided using a picture received through the camera.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a camera (121);
a touch screen (151) configured to output a picture received through the camera (121), said picture having at least a first image text portion having a first attribute and a second image text portion having a second attribute different than the first attribute; and
a controller (180) configured to:
display first and second graphic objects indicating the first and second image text portions are selectable,
perform a first predetermined function corresponding to the first attribute of the first image text portion in response to the first graphic object or the first image text portion being selected, and
perform a second predetermined function corresponding to the second attribute of the second image text portion in response to the second graphic object or the second image text portion being selected.

2. The mobile terminal of claim 1, wherein the first and second graphic objects include at least one of selectable check boxes, dotted lines around the respective first and second image text portions, and highlighting the respective first and second image text portions.

3. The mobile terminal any one of claims 1 and 2, wherein the first predetermined function corresponds to reducing or limiting display of the first image text portion on the touch screen (151), and
wherein the second predetermined function corresponds to converting the second image text portion on the touch screen (151) into text and using the converted text within a specific application.

4. The mobile terminal any one of claims 1 to 3, wherein the controller (180) is further configured to:
in response to the first graphic object or the first image text portion being selected, perform the first predetermined function limiting the outputting of the first image text portion and display another graphic object for redisplaying the first image text portion on the touch screen (151), and
in response to the second graphic object or the second image text portion being selected, perform the second predetermined function converting the second image text portion on the touch screen (151) into text and using the converted text in the specific application including at least one of an Internet search function, a sound output function, a translation function, or a memo function.

5. The mobile terminal of claim 4, wherein the controller (180) is further configured to display selectable application icons respectively corresponding the Internet search function, the sound output function, the translation function, and the memo function.

6. The mobile terminal any one of claims 1 to 5, wherein the first attribute of the first image text portion corresponds to handwritten text and the second attribute of the second image text portion corresponds to printed text.

7. The mobile terminal any one of claims 1 to 6, wherein the first attribute of the first image text portion corresponds to a first color and the second attribute of the second image text portion corresponds to a second color.

8. The mobile terminal of claim 7, wherein the controller (180) is further configured to:
display a memo graphic object for executing a memo application when the first and second graphic objects or the first and second image text portions are selected,
in response to the memo graphic object being selected, convert the first image text portion into first text and the second image text portion into second text, and display the first text and the second text on an execution screen of the memo application, and
wherein the first text is displayed with the first color and the second text is displayed with the second color.

9. The mobile terminal any one of claims 7 and 8, wherein the first and second colors are superimposed by a user,
wherein the first predetermined function corresponds to converting the first image text portion into first text, translating the converted first text into a different first text from another language, and displaying the first text and the different first text, and
wherein the second predetermined function corresponds to converting the second image text portion into second text, translating the converted second text into a different second text from another language, and displaying the second text and the different second text.

10. The mobile terminal of claim 9, wherein the first text and the different first text are displayed with the first color, and the second text and the different second text are displayed with the second color.

11. The mobile terminal any one of claims 1 to 10, wherein the picture includes a calendar image, and
wherein the controller (180) is further configured to:
convert handwriting image text portions on the calendar image into text, and
display the converted text at a same date as the handwritten image text portions on an execution screen of a calendar application.

12. The mobile terminal of claim 11, wherein the converted text is displayed with a color corresponding to a color of the handwriting image text portions on the calendar image.

13. The mobile terminal any one of claims 1 to 12, wherein the controller (180) is further configured to:
display another picture received through the camera (121), and
in response to a selection of a text image portion in the other picture, display images corresponding to a link between text included in the text image portion in the other picture and text included in the first and second image text portions.

14. The mobile terminal any one of claims 1 to 13, wherein the controller (180) is further configured to:
display a graphic object to a vicinity of the first image text portion and the second image text portion indicating additional information is available, and
display the additional information on the picture in response to a selection of the graphic object.

15. A method of controlling a mobile terminal, the method comprising:
outputting, via a touch screen (151), a picture received through the camera (121), said picture having at least a first image text portion having a first attribute and a second image text portion having a second attribute different than the first attribute;
displaying, via the touch screen (151), first and second graphic objects indicating the first and second image text portions are selectable;
performing, via a controller (180), a first predetermined function corresponding to the first attribute of the first image text portion in response to the first graphic object or the first image text portion being selected; and
performing, via the controller (180), a second predetermined function corresponding to the second attribute of the second image text portion in response to the second graphic object or the second image text portion being selected.
